# FASCICULE DE BREVET EUROPEEN

(11) **EP 0 607 828 B1**
(45) Date de publication et mention de la délivrance du brevet: **26.11.1997**
(21) Numéro de dépôt: 94100225.5
(22) Date de dépôt: 08.01.1994
(51) Int. Cl.: H02K 37/16, H02K 5/128

(54) **Moteur électromagnétique du type pas à pas, comportant une cage engagée dans un stator**
Ein elektromagnetischer Motor der schrittweisen Bauart mit einem ständergebundenen Käfig
Electromagnetic motor of the stepping type, comprising a cage engaged in a stator

(30) Priorité: 18.01.1993 CH 128/93
(43) Date de publication de la demande: 27.07.1994
(73) Titulaire: Eta SA Fabriques d'Ebauches, 2540 Grenchen (CH)
(72) Inventeur: Perrot, Friedrich, CH-2543 Lengnau (CH); Diaz, François, CH-2502 Bienne (CH)
(74) Mandataire: Barbeaux, Bernard

(56) Documents cités:
- GB-A- 2 024 528
- GB-A- 2 089 137
- US-A- 1 913 179
- US-A- 3 824 684

## Description

La présente invention concerne un moteur électromagnétique, du type pas à pas, comportant une cage engagée à l'intérieur d'un stator.

Dans ce type de construction, qui est classique, le moteur électromagnétique comporte un rotor auquel est associé un aimant permanent, ce rotor étant monté à rotation, par l'intermédiaire de pivots, à l'intérieur de la cage.

A cet effet, cette cage qui est réalisée dans les agencements classiques en un matériau métallique amagnétique, tel que du laiton, comporte un fond et un couvercle dans lesquels sont respectivement réalisés un premier et un second orifice de guidage, tandis que le rotor comporte, à ses extrémités, deux pivots engagés respectivement dans lesdits orifices.

Cette cage qui présente une forme de révolution, est pourvue d'un corps cylindrique dont la paroi vient de matière avec le fond et supporte le couvercle qui est rapporté et maintenu fixement dans celle-ci.

Afin de permettre la liaison mécanique entre des dents qui sont ménagées sur le rotor et un mécanisme extérieur à entraîner, cette cage comporte, dans le fond susmentionné, une échancrure qui s'étend axialement dans la paroi du corps cylindrique et qui laisse la place libre pour loger la roue extérieure du mécanisme à entraîner.

Ce type de moteur électromagnétique pas à pas est utilisé dans des pièces d'horlogerie.

Un exemple de moteur électromagnétique selon l'art antérieur est décrit dans le document GB-A- 2 089 137.

Pour des raisons de construction, on a cherché à réaliser la cage qui vient d'être décrite dans un matériau autre qu'un matériau métallique.

Ainsi, on a pu définir que l'utilisation de matériaux synthétiques était plus favorable dans cette application, notamment en diminuant le coût de fabrication.

Toutefois, la réalisation d'une telle cage en matière synthétique et son montage sur le moteur fait apparaître de nombreux problèmes.

En effet, les cages classiques en métal offrent une résistance aux contraintes latérales qui est telle que ces cages peuvent être chassées (montées à force) à l'intérieur du stator qui comporte un orifice circulaire prévu à cet effet.

Ce type de chassage ne peut pas être envisagé avec les cages réalisées en un matériau synthétique, à cause de leur faible résistance.

Ainsi, la présente invention a-t-elle pour but de fournir un moteur électromagnétique comportant une cage en matériau synthétique qui peut être ancrée dans un stator du moteur de façon fiable, sans soumettre le corps de la cage à des contraintes susceptibles de provoquer sa déformation.

A cet effet, l'invention a pour objet un moteur électromagnétique du type pas à pas comprenant un stator ayant un orifice, un rotor et une cage montée fixement par rapport au stator, dans laquelle le rotor est monté à rotation par rapport au stator, ladite cage comprenant un fond, une paroi formant un corps engagé dans ledit orifice et un couvercle solidaire dudit corps, ce moteur étant caractérisé en ce que ladite cage est réalisée en un matériau synthétique et en ce que des moyens d'ancrage mécanique et de positionnement sont prévus entre ladite paroi de la cage et ledit stator de façon à laisser ledit corps de cette cage libre de contraintes par rapport audit orifice.

On précisera aussi que les moyens d'ancrage sont réalisés en partie par une embase de la paroi de ladite cage qui repose axialement contre une face du stator.

Selon un mode de réalisation de l'invention, les moyens d'ancrage sont constitués par au moins un point de colle disposé entre ledit stator et le pourtour extérieur de l'embase de la cage.

Selon un autre mode de réalisation, les moyens d'ancrage sont formés par une région déformée de la cage qui emprisonne le stator en coopération avec ladite embase.

Mais d'autres avantages de l'invention apparaîtront plus clairement à la lecture de la description détaillée qui suit, prise en référence aux dessins annexés, représentant à titre d'exemple différents modes de réalisation du moteur sur l'invention et dans lesquels :
- les figures 1, 3, 5, 7 et 9 sont des vues en coupe longitudinales représentant respectivement un premier, un second, un troisième, un quatrième et un cinquième mode de réalisation du moteur selon l'invention, et
- les figures 2, 4, 6, 8 et 10 sont des vues de dessus respectivement des figures 1, 3, 5, 7 et 9.

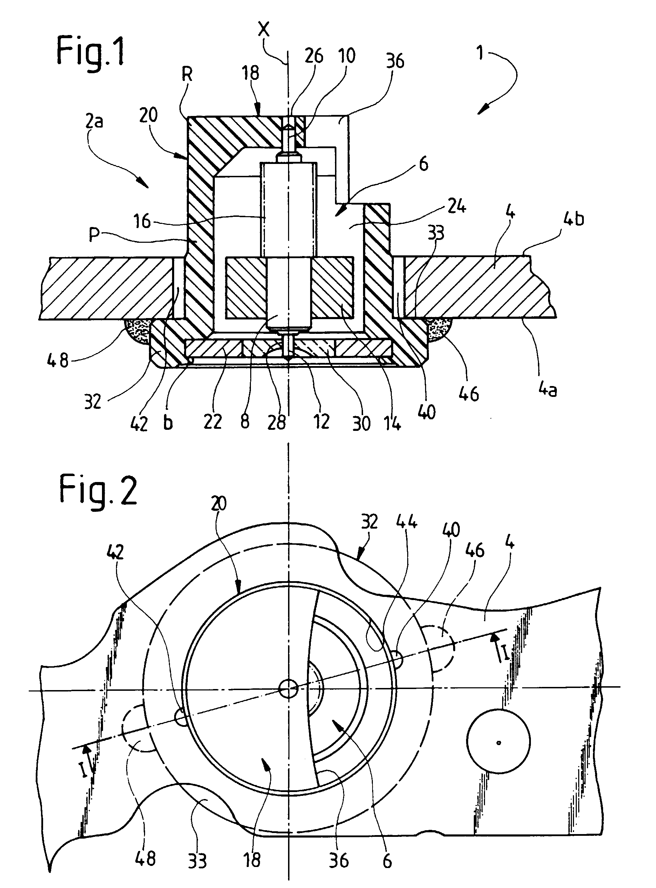

En se référant désormais à la figure 1, on décrira ci-après un premier mode de réalisation d'un moteur électromagnétique, notamment du type pas à pas, conforme à l'invention.

Ce moteur qui est repéré par la référence générale 1 comporte une cage 2a qui est montée fixement par rapport à un stator 4, représenté ici de façon partielle.

A l'intérieur de la cage 2a est monté à rotation un rotor 6 qui comporte un corps cylindrique 8. Des pivots, respectivement supérieur 10 et inférieur 12, qui s'étendent selon un axe de rotation X autour duquel le rotor 6 peut tourner, sont ménagés à l'extrémité du corps 8.

Le moteur 1 comporte un aimant permanent 14, réalisé en un matériau classique tel que du samarium-cobalt, et qui est monté sur le corps 8 du rotor 6 au voisinage du pivot inférieur 12. En outre, le rotor 6 comporte des dents 16, représentées ici de façon schématique, ces dents étant ménagées dans le corps 8 au voisinage du pivot supérieur 10 et destinées à engrener avec une roue, non représentée, d'un mécanisme à entraîner.

La cage 2a, et notamment sa paroi P, est réalisée en un matériau synthétique par exemple du POM (polyoxyméthylène), par un procédé d'injection classique. Cette cage 2a comporte un fond 18, un corps 20 et un couvercle 22.

Plus particulièrement, la cage 2a comporte, au niveau du couvercle 22, une embase 32 formée par un collet venant de matière avec le corps 20, ce collet formant embase s'étendant radialement du corps 20 vers l'extérieur, du côté opposé au fond 18.

Le corps 20 présente une forme essentiellement cylindrique et il s'étend longitudinalement, selon l'axe de révolution X. Ce corps 20 est limité à ses deux extrémités, d'une part, par le fond 18, et d'autre part, par l'embase 32.

Le fond 18, le corps cylindrique 20 et le couvercle 22 délimitent un logement 24 dans lequel est logé le rotor 6. On remarquera que le fond 18 vient de matière avec le corps 20, tandis que le couvercle 22 est rapporté dans celui-ci.

Le fond 18 et le couvercle 22 comportent respectivement un premier et un deuxième orifice de guidage 26 et 28, disposés de façon coaxiale, selon l'axe de rotation X. Dans ce mode de réalisation, l'orifice de guidage 28 est ménagé à l'intérieur d'une pierre 30 qui est chassée dans le couvercle 22 réalisé en un matériau métallique, tel que du laiton. Les deux orifices de guidage 26 et 28 reçoivent respectivement les pivots 10 et 12 ménagés sur le rotor 6.

Comme on le voit sur la figure 1, le couvercle 22 est maintenu fixement, à l'intérieur de l'embase 32 de la cage 2a, par l'intermédaire d'un bourrelet circulaire b réalisé par déformation à froid ou à chaud de l'embase 32, par exemple par une technique aux ultra-sons. Le bourrelet b recouvre la périphérie du couvercle 22 pour l'emprisonner dans l'embase 32.

L'embase 32 forme sur la cage un épaulement extérieur 33 qui repose en appui axial contre une face 4a du stator 4, dite face inférieure.

Par ailleurs, la cage 2a comporte une ouverture 36 ménagée directement dans le fond 18 et s'étendant axialement dans le corps 20, pour assurer notamment la mise en place de l'engrènement entre les dents 16 ménagées sur le rotor 6 et la roue, non représentée, du mécanisme à entraîner. Cette ouverture 36 permet aussi d'assurer l'orientation angulaire de la cage 2a, au montage sur le stator 4.

Comme on le voit très nettement sur la figure 2, cette ouverture 36 forme une échancrure s'étendant sur une partie de la cage 2a uniquement, au voisinage du premier orifice de guidage 26 ménagé dans le fond 18.

On précisera encore ici que le stator 4 comporte deux encoches classiques respectivement 40 et 42 débouchant dans un orifice circulaire 44 réalisé directement dans le stator 4 pour recevoir la cage 2a, et notamment pour recevoir le corps 20. Ces encoches 40 et 42 sont prévues dans le stator 4 pour des raisons électromagnétiques connues, qui ne seront par conséquent pas décrites ici de façon plus détaillée. L'engagement entre le corps 20 et l'orifice 44 assure le positionnement radial de la cage 2a par rapport au stator 4. Comme on le voit sur la figure 1, la cage 2a traverse le stator 4 et fait saillie de part et d'autre de celui-ci, via l'orifice 44.

Comme on le voit clairement sur la figure 1, en coupe, et en vue de dessus par des traits interrompus, la cage 2a est maintenue fixement sur le stator 4 par l'intermédiaire d'une ligne de collage continue ou de plusieurs points de colle, ici au nombre de deux, référencés respectivement 46 et 48 et ménagés dans des positions diamétralement opposées, pour s'étendre entre la surface 4a du rotor 4 et l'embase 32.

Ainsi, les points de colle 46 et 48 recouvrent partiellement le pourtour cylindrique extérieur de l'embase 32 et en partie une région de la surface 4a du stator 4.

On comprend donc que grâce aux moyens d'ancrage formés par ces deux points de colle 46 et 48, la cage 2a qui est réalisée en un matériau synthétique peut être ancrée fixement sur le stator 4 et maintenue, aussi bien axialement qu'angulairement.

Ainsi, ces moyens d'ancrage 46 et 48 qui sont prévus entre la paroi P de la cage 2a et le stator 4 laissent libre le corps 20 qui est exempt de toute contrainte latérale, et évitent tout risque de déformation pouvant nuire au bon fonctionnement du moteur et, notamment au guidage du rotor 6 à l'intérieur de la cage 2a.

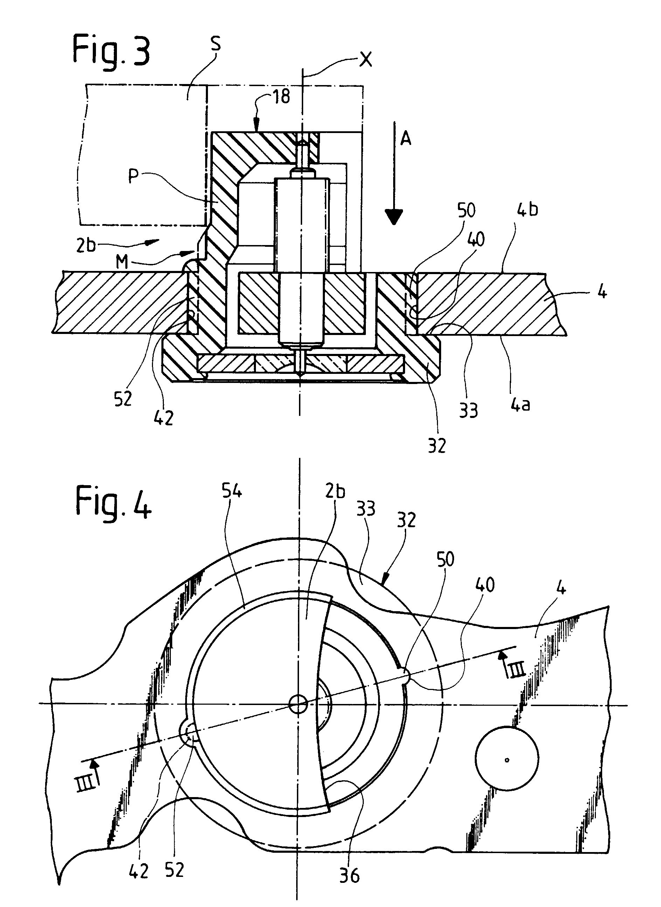

En se référant désormais aux figures 3 et 4, on décrira ci-après un deuxième mode de réalisation du moteur électromagnétique selon l'invention.

Sur ces figures, ainsi que sur les suivantes, on a repéré par les mêmes références les parties communes à ce second mode de réalisation et au premier qui a été décrit ci-avant, en rapport avec les figures 1 et 2.

La cage 2b du moteur électromagnétique selon ce second mode de réalisation comporte extérieurement deux nervures longitudinales respectivement 50 et 52 qui viennent de matière avec la paroi P de la cage 2b et qui s'étendent le long de celle-ci, parallèlement à l'axe de rotation X, depuis l'embase 32.

Ces nervures 50 et 52 qui présentent une forme semi-cylindrique sont respectivement engagées dans les encoches 40 et 42 du stator 4.

Ainsi, cet engagement permet tout au moins d'assurer le positionnement angulaire de la cage 2b, par rapport au stator 4. On notera ici que la cage 2b pourrait, dans un mode de réalisation non représenté, être immobilisée axialement par un collage du type de celui décrit ci-avant (figures 1 et 2).

Dans ce mode de réalisation, et comme on le voit très clairement sur la figure 3, une région médiane extérieure de la paroi P, référencée M, qui est située au-dessus du stator 4, est déformée de façon permanente à l'aide d'une sonotrode S capable d'assurer un chauffage suffisant de la matière synthétique constituant la paroi P, pour permettre le refoulement de la matière, vers le stator 4. Ainsi, et étant donné que la sonotrode S s'étend de façon circulaire tout autour de la partie supérieure en saillie de la cage 2b, dans laquelle est ménagée l'échancrure 36, l'abaissement axial de cette sonotrode S dans la direction de la flèche A sur la figure 3, assure le refoulement de la matière tout autour de la partie supérieure en saillie de la cage 2b, matière qui vient ainsi recouvrir partiellement la surface supérieure 4b du stator 4.

Ainsi, et comme on le voit en vue de dessus à la figure 4, on a formé tout autour de la partie en saillie de la cage 2b un bourrelet semi-circulaire 54 recouvrant suffisamment le stator 4 pour former, avec l'embase 32, des moyens d'ancrage de la cage 2b. On précisera aussi que ces moyens d'ancrage peuvent être réalisés par des secteurs déformés, non représentés, ménagés à la périphérie extérieure de la cage 2b. Le stator 4 se trouve ainsi emprisonné entre ce bourrelet 54 et l'embase 32, si bien que la cage 2b est maintenue fixement en direction axiale, mais aussi angulairement grâce aux nervures 50, 52 et ne peut être enlevée de celui-ci, ni déplacée en rotation.

On comprend ainsi que les moyens d'ancrage sont réalisés, en partie, par l'embase 32, qui repose axialement contre la face inférieure 4a du stator 4, ainsi que par le bourrelet 54 qui recouvre la face supérieure 4b de ce stator.

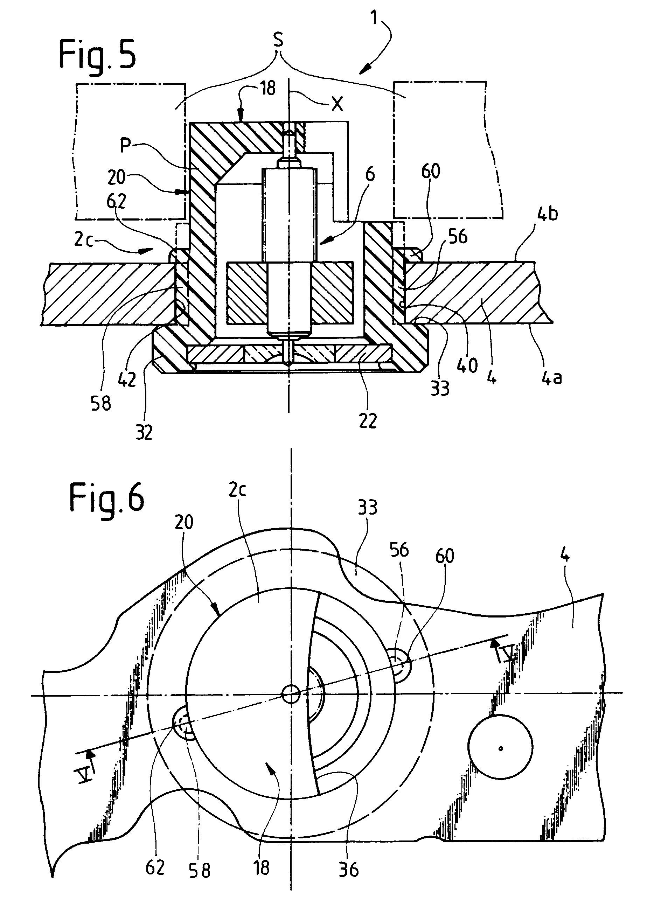

En se référant désormais aux figures 5 et 6, on décrira ci-après un troisième mode de réalisation du moteur électromagnétique selon l'invention.

Ce moteur comporte une cage 2c comportant des nervures longitudinales 56 et 58 qui sont du même type que celles susmentionnées, et qui s'étendent sur une longueur de la paroi P, nettement supérieure à l'épaisseur du stator 4.

Ainsi, et comme on le voit sur la figure 5, lors de l'application de deux sonotrodes référencées S sur les extrémités libres, non référencées, des deux nervures 56 et 58, celles-ci sont déformées de façon permanente à cause de l'échauffement de la matière les constituant. On forme ainsi deux languettes respectivement 60 et 62 qui recouvrent là aussi partiellement la surface supérieure 4b du stator 4 et qui l'emprisonnent en coopérant avec l'embase 32.

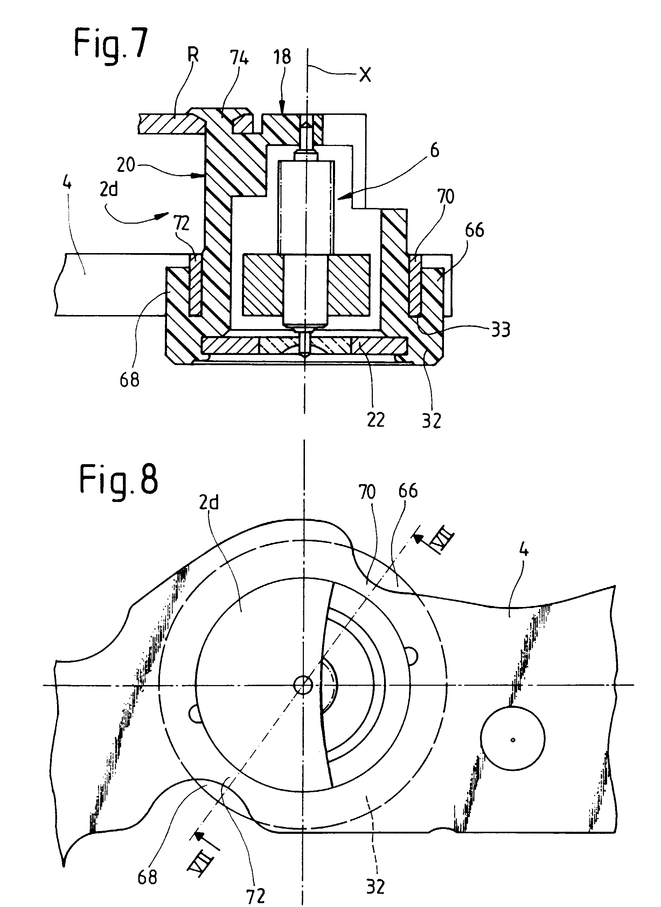

Les figures 7 et 8 représentent un quatrième mode de réalisation du moteur électromagnétique selon l'invention, dans lequel la cage 2d comporte deux ailes latérales respectivement 66 et 68 qui s'étendent à une distance du corps 20 longitudinalement depuis l'embase 32, vers le haut, et notamment vers le fond 18.

Les deux ailes 66 et 68 épousent et recouvrent partiellement le contour extérieur des isthmes du stator 4, référencés respectivement 70 et 72. Ces isthmes ont des fonctions d'augmentation de la réluctance du flux à un endroit prédéterminé du stator 4, cette construction électromagnétique qui est connue ne sera pas décrite de façon plus détaillée.

Ainsi, on comprend que la cage 2d est positionnée, grâce à ces ailes 66, 68 en prise avec les isthmes 70, 72, de façon précise angulairement, en profitant des isthmes 70 et 72 se trouvant originellement sur le stator 4 qui est de conception classique. Qui plus est, les ailes 66 et 68 assurent un premier maintien en place de la cage 2d, par frottement et par pression élastique latérale, avant que sa mise en place définitive soit effectuée.

Dans ce mode de réalisation représenté, comme on le voit plus particulièrement sur la figure 7, cette mise en place définitive est effectuée par la déformation permanente d'un téton 74 ménagé extérieurement sur le fond 18 et faisant saillie axialement de celui-ci. Le téton 74 est engagé, notamment dans un pont de rouage ou dans une platine R, représenté ici de façon partielle appartenant à une pièce d'horlogerie. La partie supérieure, non référencée, de ce téton 74 est donc chauffée, de même par exemple par ultrasons et elle vient recouvrir le pont de rouage ou la platine R pour l'emprisonner entre la partie déformée de ce téton 74 et le fond 18. Ainsi, l'ancrage de la cage 2d sur le stator 4 est assuré, et la cage 2d est maintenue fixement en direction axiale par rapport au stator.

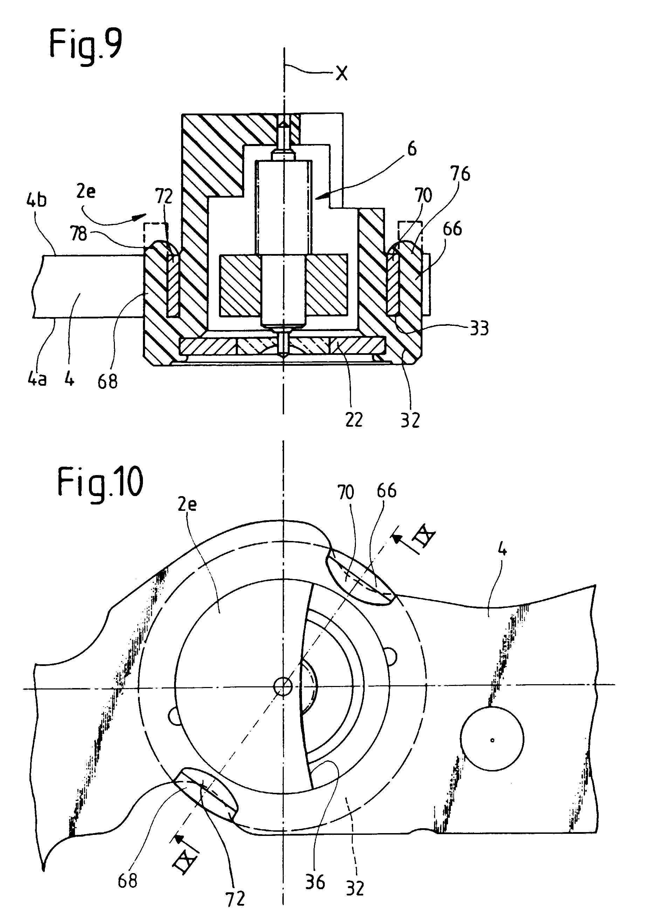

Dans le cinquième mode de réalisation représenté aux figures 9 et 10, les ailes 66 et 68 s'étendent, avant la phase finale de déformation de la matière, au-dessus du stator 4 pour dépasser de sa surface supérieure 4b. Après application d'une ou plusieurs sonotrodes, non représentées, et d'un chauffage aux ultrasons de l'extrémité libre, non référencée, des ailes 66 et 68, deux languettes ou rabats 76 et 78 sont créées et viennent recouvrir la surface supérieure des isthmes 70, 72 pour les emprisonner fixement en coopérant avec l'embase 32, et immobiliser la cage 2e.

On comprend donc de ce qui vient d'être décrit que les moyens de positionnement angulaire et de fixation axiale de la cage, décrits dans ces modes de réalisation sont combinables entre-eux pour fournir des moyens d'ancrage assurant une immobilisation adéquate de la cage sur le stator, sans risque d'apparition de contraintes, notamment radiales, dans la paroi P.

## Revendications

1. Moteur électromagnétique du type pas à pas pour pièce d'horlogerie, comprenant un stator (4) ayant un orifice (44), un rotor (6) et une cage (2a, 2b, 2c, 2d, 2e) montée fixement par rapport au stator, dans laquelle le rotor est monté à rotation par rapport au stator, ladite cage comprenant un fond (18), une paroi (P) formant un corps (20) engagé dans ledit orifice (44) et un couvercle (22) solidaire dudit corps (20), caractérisé en ce que ladite cage (2a, 2b, 2c, 2d, 2e) est réalisée en un matériau synthétique et en ce que des moyens d'ancrage mécanique et de positionnement sont prévus entre ladite paroi (P) de la cage et ledit stator (4) de façon à laisser ledit corps (20) de cette cage libre de contraintes par rapport audit orifice (44).

2. Moteur électromagnétique selon la revendication 1, caractérisé en ce que les moyens d'ancrage sont réalisés en partie par une embase (32) de la paroi (P) de ladite cage qui repose axialement contre une face du stator (4).

3. Moteur électromagnétique selon la revendication 2, caractérisé en ce que les moyens d'ancrage sont constitués par au moins un point de colle (46, 48) disposé entre ledit stator (4) et le pourtour extérieur de l'embase (32) de la cage (2a).

4. Moteur électromagnétique selon la revendication 1 ou 2, caractérisé en ce que les moyens d'ancrage sont formés par une région déformée de la cage (2b, 2c, 2d, 2e) qui emprisonne le stator en coopération avec ladite embase (32).

5. Moteur électromagnétique selon la revendication 4, caractérisé en ce que la région déformée constitue un bourrelet (54) qui s'étend sur le pourtour extérieur de la paroi (P) de la cage (2b).

6. Moteur électromagnétique selon l'une des revendications 1 à 5, caractérisé en ce qu'il comporte des nervures longitudinales (50, 52, 56, 58) engagées respectivement dans des encoches (40, 42) du stator (4), pour former les moyens de positionnement au moins angulaire de la cage (2b, 2c).

7. Moteur électromagnétique selon la revendication 6, caractérisé en ce que les nervures longitudinales (52, 56, 58) en étant déformées plastiquement forment des languettes (60, 62) qui recouvrent partiellement le stator (4), constituent lesdits moyens d'ancrage et immobilisent la cage (2b, 2c) axialement par rapport à celui-ci.

8. Moteur électromagnétique selon la revendication 2, caractérisé en ce qu'il comporte des ailes (66, 68) qui s'étendent longitudinalement depuis l'embase (32) et qui coopèrent avec des isthmes (70, 72) ménagés sur le stator (4) pour former au moins lesdits moyens de positionnement.

9. Moteur électromagnétique selon la revendication 8, caractérisé en ce que lesdites ailes (66, 68) en étant déformées plastiquement à leur extrémité libre forment des languettes (76, 78) qui recouvrent partiellement le stator (4) et constituent lesdits moyens d'ancrage immobilisant la cage (2e).

10. Pièce d'horlogerie comprenant un moteur selon l'une des revendications 1, 2 et 8, caractérisée en ce que la cage (2d) comporte un téton (74) s'étendant du fond (18), le téton (74) qui est déformé plastiquement étant ancré sur un pont de rouage ou une platine (R) de ladite pièce d'horlogerie.

## Patentansprüche

1. Elektromagnetischer Schrittmotor für Zeitmeßgerät, umfassend einen Stator (4) mit einem Durchbruch (44), einen Rotor (6) und einen Käfig (2a, 2b, 2c, 2d, 2e), der fest relativ zum Stator montiert ist, in welchem der Rotor drehbeweglich relativ zum Stator montiert ist, welcher Käfig einen Boden (18), eine einen Korpus (20), der in den Durchbruch (44) eingefügt ist, bildende Wandung (P) und einen mit dem Korpus (20) verbundenen Deckel (22) umfaßt, dadurch gekennzeichnet, daß der Käfig (2a, 2b, 2c, 2d, 2e) aus einem synthetischen Material hergestellt ist und daß mechanische Verankerungs- und Positioniermittel zwischen der Wandung (P) des Käfigs und dem Stator (4) der Art vorgesehen sind, daß der Korpus (20) dieses Käfigs frei von Spannungen bezüglich des Durchbruchs (44) gelassen ist.

2. Elektromagnetischer Motor nach Anspruch 1, dadurch gekennzeichnet, daß die Verankerungsmittel teilweise von einem Flansch (32) der Wandung (P) des Käfigs gebildet sind, der axial an einer Fläche des Stators (4) anliegt.

3. Elektromagnetischer Motor nach Anspruch 2, dadurch gekennzeichnet, daß die Verankerungsmittel von mindestens einem Klebepunkt (46, 48) gebildet sind, der zwischen dem Stator (4) und dem Außenumfang des Flansches (32) des Käfigs (2a) angeordnet ist.

4. Elektromagnetischer Motor nach Anspruch 1 oder 2, dadurch gekennzeichnet, daß die Verankerungsmittel von einer deformierten Region des Käfigs (2b, 2c, 2d, 2e) gebildet sind, welche den Stator im Zusammenwirken mit dem Flansch (32) einschließen.

5. Elektromagnetischer Motor nach Anspruch 4, dadurch gekennzeichnet, daß die deformierte Region von einem Wulst (54) gebildet ist, der sich auf dem Außenumfang der Wandung (P) des Käfigs (2b) erstreckt.

6. Elektromagnetischer Motor nach Anspruch 1 bis 5, dadurch gekennzeichnet, daß er Längsrippen (50, 52, 56, 58) umfaßt, die in Einschnitte (40, 42) des Stators (4) eingreifen, um die Positioniermittel zumindest in Winkelrichtung des Käfigs (2b, 2c) zu bilden.

7. Elektromagnetischer Motor nach Anspruch 6, dadurch gekennzeichnet, daß die Längsrippen (52, 56, 58), indem sie plastisch deformiert werden, Zungen (60, 62) bilden, die teilweise den Stator (4) abdecken und die Verankerungsmittel bilden und den Käfig (2b, 2c) axial relativ zu jenem immobilisieren.

8. Elektromagnetischer Motor nach Anspruch 2, dadurch gekennzeichnet, daß er Flügel (66, 68) umfaßt, die sich in Längsrichtung ausgehend von dem Flansch (32) erstrecken und die mit Isthmen (70, 72) zusammenwirken, die in den Stator (4) eingearbeitet sind, um zumindest die Positioniermittel zu bilden.

9. Elektromagnetischer Motor nach Anspruch 8, dadurch gekennzeichnet, daß die Flügel (66, 68), indem sie an ihrem freien Ende plastisch deformiert werden, Zungen (76, 78) bilden, die teilweise den Stator (4) überdecken und die Verankerungsmittel bilden, welche den Käfig (2e) festlegen.

10. Zeitmeßgerät mit einem Motor nach einem der Ansprüche 1, 2 und 8, dadurch gekennzeichnet, daß der Käfig (2d) einen sich vom Boden (18) weg erstreckenden Kopf (74) aufweist, der plastisch verformt ist, indem er sich an einer Räderwerksbrücke oder Plantine (R) des Zeitmeßgeräts verankert.

## Claims

1. Electromagnetic motor of the stepping type for a timepiece, including a stator (4) having an orifice (44), a rotor (6) and a cage (2a, 2b, 2c, 2d, 2e) fixedly mounted relative to the stator, in which the rotor is mounted for rotation relative to the stator, said cage including a bottom (18), a wall (P) forming a body (20) engaged into said orifice (44) and a cover (22) integral with said body (20), characterized in that said cage (2a, 2b, 2c, 2d, 2e) is formed from a synthetic material and in that mechanical anchoring and positioning means are provided between said wall (P) of the cage and said stator (4) so as to leave said body (20) free from stresses with respect to said orifice (44).

2. Electromagnetic motor according to claim 1, characterized in that the anchoring means are formed in part by a seat (32) of the wall (P) of said cage which rests axially against a face of the stator (4).

3. Electromagnetic motor according to claim 2, characterized in that the anchoring means are constituted by at least one glue point (46, 48) arranged between said stator (4) and the outer periphery of the seat (32) of the cage (2a).

4. Electromagnetic motor according to claim 1, characterized in that the anchoring means are formed by a deformed region of the cage (2b, 2c, 2d, 2e) which confines the stator in cooperation with said seat (32).

5. Electromagnetic motor according to claim 4, characterized in that the deformed region constitutes a bead (54) which extends over the outer periphery of the wall (P) of the cage (2b).

6. Electromagnetic motor according to any of claims 1 to 5, characterized in that it includes longitudinal ribs (50, 52, 56, 58) respectively fitting into notches (40, 42) of the stator (4) in order to form at least the angular positioning means for the cage (2b, 2c).

7. Electromagnetic motor according to claim 6, characterized in that the longitudinal ribs (52, 56, 58) in being plastically deformed form tongues (60, 62) which partially overlie the stator (4) to constitute said anchoring means and block the cage (2b, 2c) axially relative to the latter.

8. Electromagnetic motor according to claim 2, characterized in that it includes vanes (66, 68) which extend longitudinally from the seat (32) and which cooperate with necks (70, 72) formed on the stator (4) in order to form at least said positioning means.

9. Electromagnetic motor according to claim 8, characterized in that said vanes (66, 68) in being plastically deformed at their free ends form tongues (76, 78) which partially overlie the stator (4) and constitute said anchoring means blocking the cage (2e).

10. Timepiece comprising a motor according to any of claims 1, 2 and 8, characterized in that the cage (2d) includes a stud (74) extending from the bottom (18), the stud (74), which is plastically deformed, being anchored onto a wheel train bridge or a base plate (R) of said timepiece.
